# EUROPÄISCHE PATENTSCHRIFT

(11) **EP 3 566 827 B1**
(45) Veröffentlichungstag und Bekanntmachung des Hinweises auf die Patenterteilung: **02.06.2021**
(21) Anmeldenummer: 19000205.5
(22) Anmeldetag: 29.04.2019
(51) Int. Cl.: B25J 15/02

(54) **GREIFVORRICHTUNG MIT OPTIMIERTEM DOPPELSCHIEBEKEILGLIED I**
GRIPPING DEVICE WITH OPTIMIZED DOUBLE PUSH WEDGE MEMBER I
DISPOSITIF DE PRÉHENSION À ÉLÉMENT CUNÉIFORME COULISSANT DOUBLE OPTIMISÉ I

(30) Priorität: 30.04.2018 DE 102018003488
(43) Veröffentlichungstag der Anmeldung: 13.11.2019
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1-102004 060 112
- DE-A1-102015 218 063

## Beschreibung

Die Erfindung betrifft eine Greifvorrichtung mit bewegliche Greifelemente tragenden Schlitten, wobei die Schlitten in Greifrichtung der Greifelemente hintereinander in einer in einem Grundkörper angeordneten, zu den Greifelementen hin zumindest bereichsweise offenen Führungsnut parallel zur Greifrichtung - zwischen einer Öffnungs- und Schließstellung - über ein Stellglied antreibbar geführt und quer zur Greifrichtung allseitig abstützend gelagert sind. Zwischen den Schlitten ist ein kuppelndes Doppelschiebekeilglied angeordnet, das senkrecht zur Greifrichtung verfahrbar an einem beweglichen Teil des Stellglieds angelenkt ist. Die Schlitten weisen in den einander zugewandten Stirnflächen jeweils eine T-Nut auf, in die jeweils ein vom Doppelschiebekeilglied abstehender T-Nutstein eingreift. Die T-Nutsteine sind an einem zentralen Basiskörper des Doppelschiebekeilglieds jeweils über einen Nutsteinhaltesteg angeformt oder angeordnet. Die Führungslängsrichtungen der T-Nuten schließen einen Winkel von 45 bis 122 Winkelgraden ein.

Aus der DE 10 2015 004 404 B4 ist eine Präzisionsgreifvorrichtung bekannt, bei der in einem Gehäuse Greifelemente tragende Schlitten über ein Doppelschiebekeilglied angelenkt werden. Das Doppelschiebekeilglied wird durch ein pneumatisches Stellglied angetrieben.

Die DE 10 2004 060 112 A1 beschreibt einen Parallelgreifer, der im Greifergehäuse in einer Führung zwei Greifelemente tragende Schlitten führt. Die sich halbseitig überdeckenden Schlitten umfassen einen Doppelschiebekeil, der jeweils ebenfalls nur halbseitig mit dem einzelnen Schlitten in Wirkverbindung steht. Der Doppelschiebekeil ist pneumatisch angetrieben.

Der vorliegenden Erfindung liegt die Problemstellung zugrunde, eine Greifvorrichtung zu entwickeln, die trotz eines geringen Bauraums bei großer Greifkraft einen geringen Verschleiß aufweist.

Diese Problemstellung wird mit den Merkmalen des Patentanspruchs 1 gelöst. Der einzelne T-Nutstein weist jeweils eine Außen- und zwei Innenflanken auf. Jede Flanke ist in eine Hochlastkantenzone, eine Hochlastzone, eine plane Mittelzone, eine Niederlastzone und eine Niederlastkantenzone aufgeteilt. Die Zonen sind - außer der Mittelzone - gekrümmte Raumflächen, deren Krümmung jeweils nur in einer vertikalen Mittenlängsebene liegt. Die jeweilige Hochlastzonenkrümmung ist mindestens 5-mal größer als die Niederlastzonenkrümmung.

Die Greifelemente tragenden Schlitten werden im Ausführungsbeispiel mithilfe einer druckluftbetriebenen Zylinder-Kolben-Einheit als Stellglied in ihrer Führungsnut bewegt. Die Kolbenstange der Zylinder-Kolben-Einheit wirkt hierbei direkt auf ein Doppelschiebekeilglied, das Teil eines Doppelschiebekeil- bzw. Doppelkeilhakengetriebes ist. Innerhalb des Getriebes wird die Hubbewegung der Kolbenstange in eine z.B. um 90 Winkelgrade gekippte Greif- oder Lösebewegung umgelenkt. Für den Fall, dass der Keilwinkel des Doppelschiebekeilgetriebes ungleich 45 Winkelgrade ist, findet neben der Richtungsumlenkung auch eine Über- oder Untersetzung statt.

Hierbei sind die Bauteile des Doppelschiebekeilgetriebes, besonders im Endbereich der Greifbewegung, bestimmten Biegeverformungen und Verlagerungen im Rahmen des jeweiligen Führungsspiels ausgesetzt. In der Folge ergeben sich im Bereich der Keilgetriebe u.a. Verkantungen, die in einem Teil der Arbeitsfugen temporär zu hohen Flächenpressungen führen. Um die Wirkung der Verkantung zu reduzieren, werden beim Doppelschiebekeilglied die gefährdeten Stellen durch gekrümmte Raumflächen ersetzt, wodurch trotz der Kippbewegung der Bauteile der Keilgetriebe - anstelle schmaler Linienberührungen - flächenhafte Berührungszonen zulässiger Flächenpressung in der jeweiligen Arbeitsfuge entstehen.

Durch die gekrümmten Raumflächen am Doppelschiebekeilglied ergeben sich in den Kontaktzonen zwischen dem Doppelschiebekeilglied und den angelenkten Schlitten sogenannte Keilspalte, die während einer Relativbewegung zwischen Doppelschiebekeilglied und den Schlitten das im Bereich der Schiebekeilgetriebe eingelagerte Schmierfett - bei jedem Stellgliedhub - in die Kontaktzonen fördert.

Durch die neugestalteten Kontaktzonen wird somit zum einen die Pittingbildung durch eine zu hohe Flächenpressung vermieden und zum anderen durch die Optimierung des tribologischen Systems die Kontaktzonenabrasion stark vermindert.

Als Stellglieder können auch elektromechanische, elektromagnetische, piezoelektrische und auf Formgedächtniselementen basierende Antriebe verwendet werden.

Im Ausführungsbeispiel werden nur Teile von Parallelgreifern gezeigt. Selbstverständlich können die meisten Teile mit Ausnahme des Gehäuses auch für Drei-, Vier- und Mehrbacken-, Mehrschlitten- oder Zentrischgreifer verwendet werden, sodass die dargestellte Problemlösung auch dort eingesetzt werden kann. Bei Drei-, Vier- oder Mehrbackengreifern werden in den beispielsweise sternförmig oder parallel angeordneten Führungsnuten pro Nut in der Regel zwei Schlittenführungsschienen vorgesehen. Es ist aber auch möglich, pro Führungsnut nur eine, drei oder mehrere einzelne Schlittenführungsschienen einzubauen.

Weitere Einzelheiten der Erfindung ergeben sich aus den Unteransprüchen und der nachfolgenden Beschreibung schematisch dargestellter Ausführungsformen.
- Figur 1:: perspektivische Ansicht eines Parallelgreifers;
- Figur 2:: perspektivische Ansicht eines Doppelschiebekeilglieds;
- Figur 3:: Längsschnitt durch den Parallelgreifer nach Figur 1, jedoch mit Greifbacken; der rechte Greifbacken ist geöffnet;
- Figur 4:: mittiger Querschnitt durch den Parallelgreifer;
- Figur 5:: perspektivische Ansicht eines Schlittens von schräg oben;
- Figur 6:: perspektivische Ansicht eines Schlittens von schräg unten;
- Figur 7:: Seitenansicht des Doppelschiebekeilglieds mit in einem T-Nutenstein eingezeichneten Querschnitt;
- Figur 8:: Draufsicht auf das Doppelschiebekeilglied;
- Figur 9:: Seitenansicht des Doppelschiebekeilglieds;
- Figur 10:: Unteransicht des Doppelschiebekeilglieds;
- Figur 11:: Seitenansicht eines Teils des Doppelschiebekeilglieds, vergrößert;
- Figur 12:: perspektivische Ansicht eines Doppelschiebekeilglieds nach Figur 2 von schräg unten.

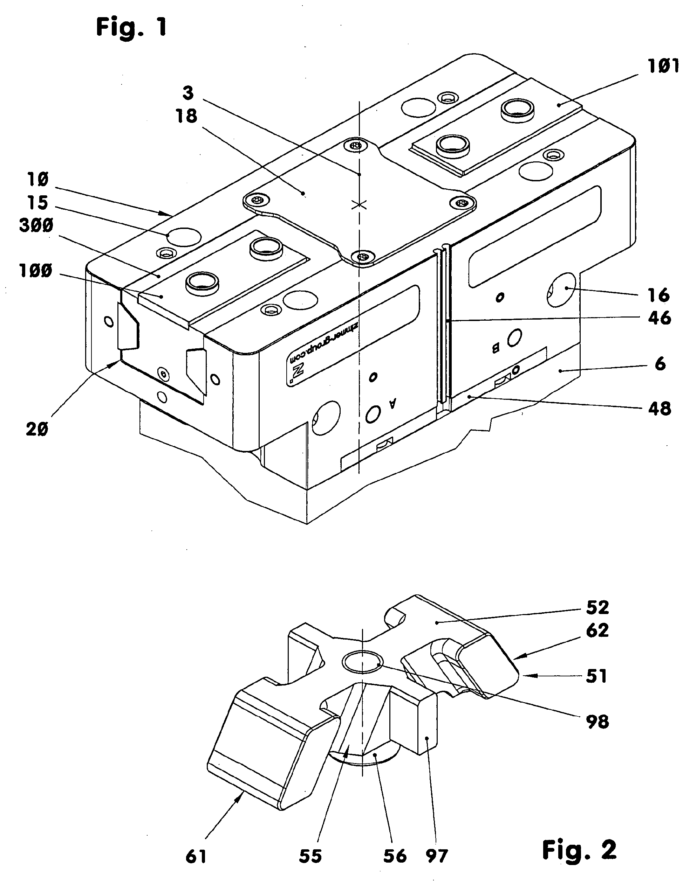

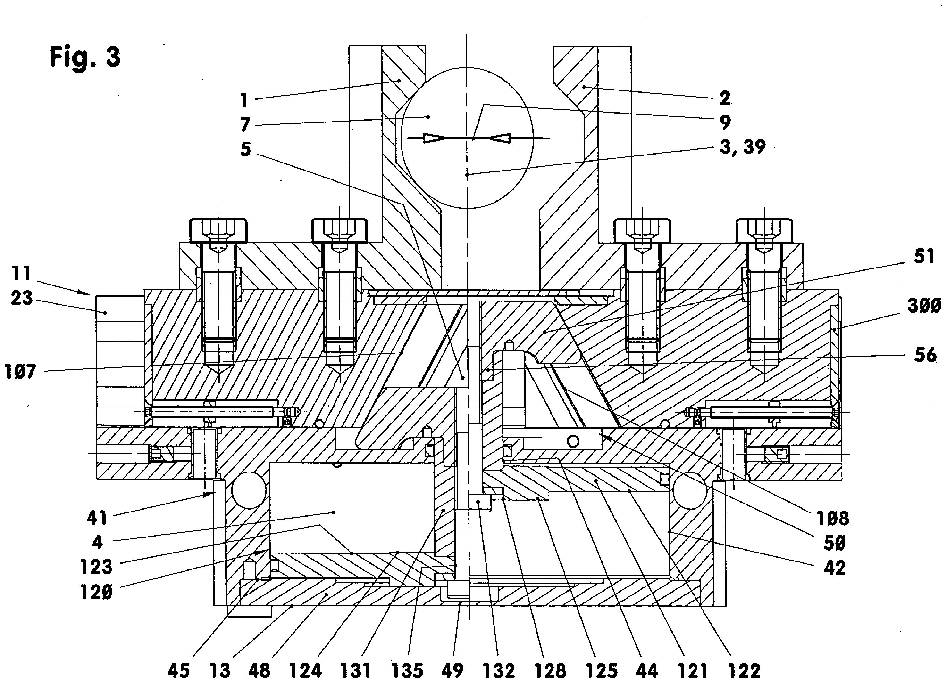

Die Figur 1 zeigt eine Parallelgreifvorrichtung mit zwei Schlitten (100, 101). Die in ihrer Längsrichtung beweglichen Schlitten (100, 101) sind in einem Gehäuse bzw. Grundkörper (10) in einer gemeinsam genutzten Führungsnut (20) z.B. gleitgelagert geführt. Das die Führungsnut aufnehmende Gehäuse (10) umgibt ferner eine z.B. doppeltwirkende Zylinder-Kolben-Einheit (120), vgl. Figur 3. Die Zylinder-Kolben-Einheit wirkt über ein Doppelschiebekeilgetriebe (50) auf die Schlitten (100, 101).

Die Figur 3 stellt die Parallelgreifvorrichtung im Längsschnitt mit zwei auf den Schlitten (100, 101) aufgeschraubten Greifbacken (1, 2) dar. Die Greifbacken sollen ein z.B. zylinderförmiges Werkstück (7) greifen. Der Greifbacken (1) der linken Vorrichtungsseite liegt am Werkstück (7) an, während der Greifbacken (2) der rechten Vorrichtungsseite in geöffneter Position dargestellt ist. Im Gegensatz zur fiktiven Darstellung nach Figur 3 bewegen sich die Greifbacken (1, 2) getriebebedingt zwangsläufig immer synchron aufeinander zu oder voneinander weg.

Der z.B. im Wesentlichen quaderförmige Grundkörper (10) der Parallelgreifvorrichtung besteht aus einem oberen Führungsabschnitt (11) und einem unteren Antriebsabschnitt (41). Er ist beispielsweise aus der Aluminiumlegierung AlMgSi1 gefertigt. Im Ausführungsbeispiel hat der Grundkörper (10) die Abmessungen von 270 mm * 115 mm * 111 mm. Bei dieser beispielhaften Baugröße beträgt der maximale Hub jedes Schlittens (100, 101) bzw. Greifbackens (1, 2) 16,7 mm.

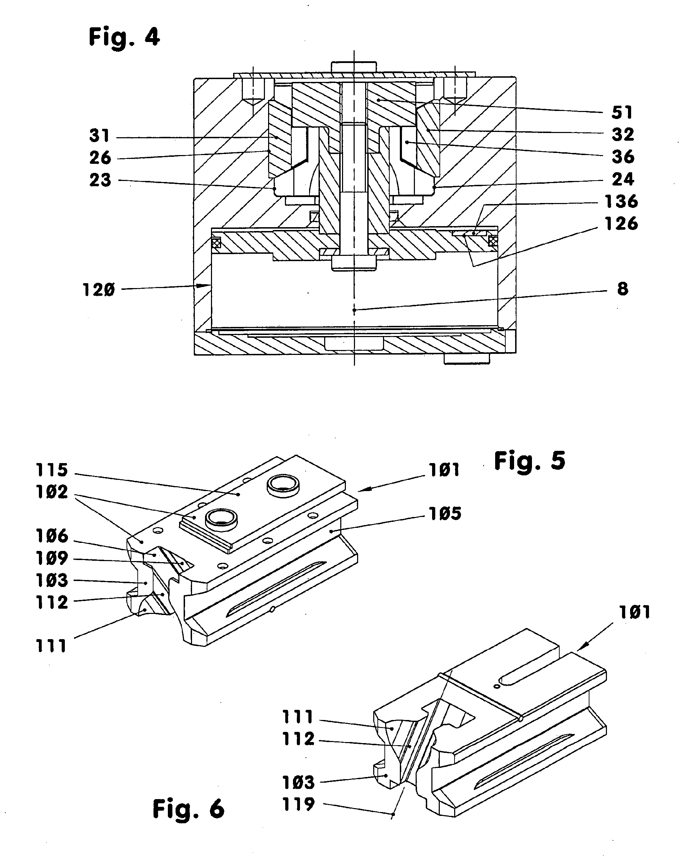

Der Führungsabschnitt (11) nimmt zentral die nach oben - zu den Greifelementen (1, 2) hin - offene Führungsnut (20) auf, vgl. Figuren 1 und 4, deren z.B. rechteckiger Querschnitt eine Breite von z.B. 57 mm und Höhe von z.B. 44,6 mm misst. In den planen Seitenwandungen (23, 24) der Führungsnut (20) ist jeweils eine flache, z.B. 2 mm tiefe und 29 mm breite Schienenführungsnut (26) zur Aufnahme einer Führungsschiene (31, 32) eingearbeitet. Die einzelne Schienenführungsnut (26) hat einen rechteckigen Querschnitt, einen planen Nutgrund und z.B. plane Seitenwandungen. Die Schienenführungsnuten (26) erstrecken sich hier über die gesamte Länge des Grundkörpers (10). Mittig zwischen den planen Seitenwandungen (23, 24) der Führungsnut (20) liegt die vertikale Mittenlängsebene (8), vgl. Figur 4.

Jede Führungsschiene (31, 32) ist hier eine aus einem nichtrostenden Stahl, z.B. aus einem X90CrMoV18 gefertigte, im Wesentlichen trapezförmige Stange. Die Breite der sich z.B. über die Länge des Grundkörpers (10) erstreckende Führungsschiene (31, 32) beträgt im Ausführungsbeispiel 29 mm. Die Höhe der Führungsschiene (31, 32) misst z.B. 13,85 mm. Aufgrund der hohen Festigkeit einer derartigen Führungsschiene (31, 32) können die Schlitten große Momente auf den Grundkörper (10) übertragen. Demzufolge kann die Greifvorrichtung große Greifkräfte auf das aufzunehmende Werkstück (7) ausüben.

Die einzelne Führungsschiene (31, 32) hat einen sechseckigen Querschnitt und weist zwei einander spiegelsymmetrisch gegenüberliegende Tragflanken auf, die einen Winkel von 30 bis 90 Winkelgraden einschließen. Mindestens eine der Führungsschienen (31, 32) weist mittig eine Quernut (36) mit der Breite von z.B. 5,7 mm und der Tiefe von z.B. 5,7 mm auf. Diese Quernut (36) dient u.a. der zusätzlichen verschleißfesten Führung des im Doppelschiebekeilgetriebe (50) verwendeten Doppelschiebekeilglieds (51). Im Ausführungsbeispiel hat jede Führungsschiene (31, 32) eine Quernut (36).

Ggf. können die einzelnen Führungsschienen (31, 32) auch aus zwei oder mehreren hintereinander angeordneten Abschnitten aufgebaut sein. Im Ausführungsbeispiel sind die Führungsschienen (31, 32) jeweils mit vier Senkschrauben am Grundkörper (10) befestigt.

Der unterhalb des Führungsabschnitts (11) gelegene Antriebsabschnitt (41) nimmt im Wesentlichen die Zylinder-Kolben-Einheit (120) und die Betätigungsmittel führenden Kanäle und Durchbrüche auf. In den seitlichen Bereichen unterhalb des Führungsabschnitts (11) ist der Grundkörper (10) beidseitig um ca. 17,2 % der Grundkörpergesamtlänge auf einer Höhe von ca. 42 % der Grundkörpergesamthöhe verkürzt ausgebildet.

Die Unterseite (13) des Grundkörpers (10) hat eine hier zwölfeckige Deckelausnehmung (45), vgl. Figuren 3 und 4. Die Deckelausnehmung erstreckt sich von der vorderen bis zur hinteren Längsseitenwandung des Grundkörpers (10). Von der Deckelausnehmung (45) aus ragt eine z.B. 40 mm tiefe Zylinderausnehmung (42) in den Grundkörper (10) in Richtung der Führungsnut (20) hinein. Die Zylinderausnehmung (42) hat hier einen ovalen Querschnitt.

Im Zentrum des Bodens der Zylinderausnehmung (42) befindet sich eine Durchgangsbohrung (44), vgl. Figur 3, die die Zylinderausnehmung (42) mit der Führungsnut (20) verbindet. Ca. mittig weist die Durchgangsbohrung (44) einen Einstich zur Aufnahme eines Kolbenstangendichtrings auf.

Zur Befestigung des Grundkörpers (10) an einem Maschinenschlitten (6) verfügt dieser über vier vertikale Bohrungen (15) und zwei Querdurchgangsbohrungen (16). In Figur 1 werden speziell die vertikalen Bohrungen (15) zur Befestigung benutzt.

Der Grundkörper (10) weist auf der in Figur 1 dargestellten großen Längsseitenwandung im mittleren Bereich zwei auch zu dieser Seitenwandung hin offene Sensorausnehmungen (46) auf. Ihre großteils u-förmigen Querschnitte werden im Bereich der Seitenwandung durch beidseits - als Fixierschutz für einsetzbare Kolbenpositionssensoren - vorspringende Hintergriffe verengt.

Der Deckel (48), der mit geringem Spiel in die 12-eckige Deckelausnehmung (45) passt, vgl. Figuren 3 und 4, hat zentral eine dreistufige Vertiefung (49), in die der Kolben (121) inklusive der Kolbenstangenschraube (132) des pneumatischen Antriebs (120) in der Greiferschließstellung partiell hineinragen kann.

In dem von der Zylinderausnehmung (42) und dem Deckel (48) umgebenen Zylinderinnenraum (4) ist der ovale Kolben (121) mit seiner zweiteiligen Kolbenstange (131, 132) angeordnet. Der Kolben (121) hat zentral eine dreistufige Durchgangsbohrung (135), wobei die mittlere Stufe den kleinsten Durchmesser aufweist.

Die kolbenstangenseitige Bohrungsstufe hat zur Aufnahme einer Kolbenstangenhülse (131) einen Durchmesser von z.B. 25 mm. Um die Durchgangsbohrung (135) herum hat der Kolben (121) dort einen z.B. 0,4 mm hohen scheibenförmigen Vorsprung (124), der als oberer Anschlag des Kolbens (121) dient. Der Kolben (121) hat kolbenstangenseitig, nach dem Schnitt in Figur 4 auf der rechten Seite, eine Sacklochbohrung (126). In diese Sacklochbohrung ist ein Scheibenmagnet (136) für die Kolbenpositionsüberwachung eingeklebt.

Der ovale Kolben (121) besitzt zur Abdichtung gegenüber der Zylinderbodenwandung des Grundkörpers (10) einen umlaufenden, in einer Dichtnut gelagerten Quaddichtring. Die Kolbenbodenseite (122), vgl. Figur 4, weist ebenfalls einen Vorsprung (125) auf, in dessen zentraler Senkung (128) der Kopf der Kolbenstangenschraube (132) mit einer Unterlagscheibe sitzt, vgl. Figur 3.

Die Kolbenstange (131, 132) besteht hier aus der Kolbenstangenschraube (132), z.B. einer M10-Zylinderkopfschraube, und einer auf ihr aufgesteckten Kolbenstangenhülse (131). Diese beiden Teile bilden zusammen mit dem Kolben (121) und Doppelschiebekeilglied (51) des Doppelschiebekeilgetriebes (50) eine formsteife Baugruppe. Die Kolbenstangenschraube (132) ist auf den Rohrzapfen (56) des Doppelschiebekeilglieds (51) aufgesteckt und in der Gewindebohrung (98) verschraubt.

Das Doppelschiebekeilglied (51), das im mittleren Bereich der Führungsnut (20) als Teil eines Doppelschiebekeilgetriebes (50) angeordnet ist, ist im Wesentlichen ein balkenartiges Bauteil, das zur vertikalen Mittenlängsebene (8) und zur vertikalen Mittenquerebene (39) spiegelsymmetrisch aufgebaut ist.

Das Doppelschiebekeilglied (51) besteht beim Parallelgreifer im Wesentlichen aus einem zentralen Basiskörper (55) zur Anbindung an einem Stellglied (120) und zwei angeformten T-Nutsteinen (61, 62), zur Anlenkung der beiden Schlitten (100, 101), vgl. Figuren 2, 7 bis 12. Der Basiskörper (55) hat eine Breite, die mit der Gesamtbreite der T-Nutsteine (61, 62) übereinstimmt. Vom ihm (55) stehen zwei Nutsteinhaltestege (91, 92), zwei Stützstege (97) und ein Rohrzapfen (56) ab.

Die beiden beidseitig vom Basiskörper (55) senkrecht abstehenden Stützstege (97) haben eine Breite von z.B. 6,5 mm. Ihre Länge erstreckt sich von der Oberseite (52) des Doppelschiebekeilglieds (51) bis zum Ansatz des Rohrzapfens (56). Über den Basiskörper (55) stehen sie seitlich z.B. 9,5 mm über.

Jeder am Basiskörper (55) angeformte Nutsteinhaltesteg (91, 92) - er hat eine Breite von z.B. 11 mm - trägt an seinem außenliegenden Ende einen T-Nutstein (61, 62). Letzterer steht beidseitig z.B. 7 mm über den jeweiligen Nutsteinhaltesteg (91, 92) über. Er hat im Wesentlichen einen Parallelogrammquerschnitt, dessen spitze Winkel z.B. 60,3 Winkelgrade einschließen.

Jeder T-Nutstein (61, 62) hat eine Außenflanke (63), die zugleich auch eine Stirnseite des Doppelschiebekeilglieds (51) darstellt. Der Außenflanke (63) liegen nutsteinstegseitig zwei Innenflanken (64) gegenüber, die beide in einer zur Außenflanke (63) parallelen Ebene liegen. Der Abstand zwischen der Außenflanke (63) und einer Innenflanke (64) misst z.B. 11,5 mm. Die Stirnseiten (65) des Doppelschiebekeilglieds (51) schließen mit der Mittellinie (3) z.B. einen Winkel von 29,7 Winkelgraden ein. Die Ausdehnung der T-Nutsteine (61, 62) beträgt in einer zur Mittellinie (3) parallelen Richtung z.B. 21 mm.

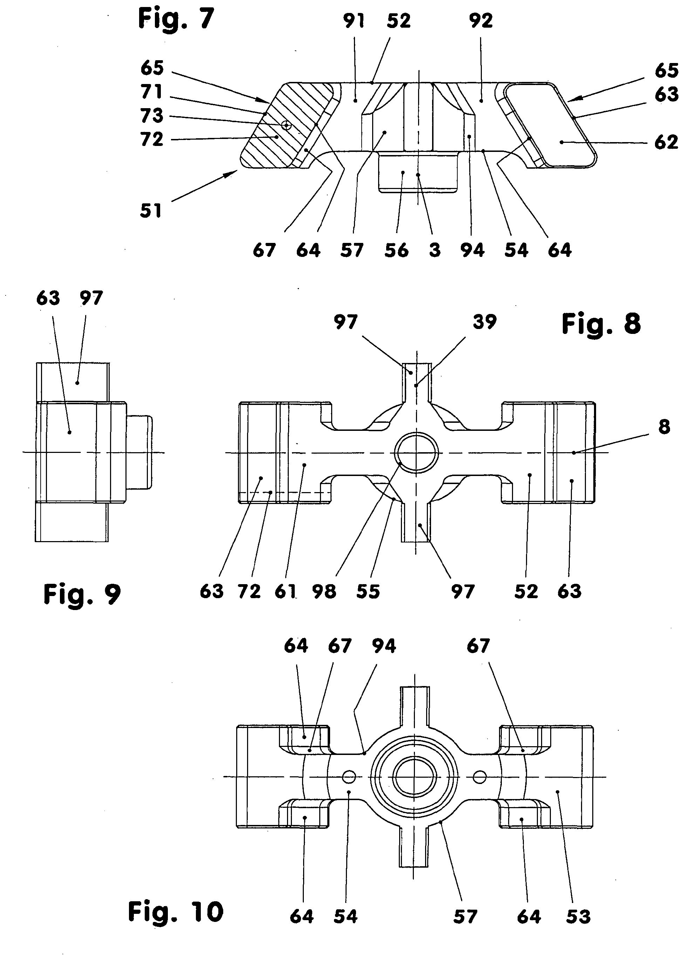

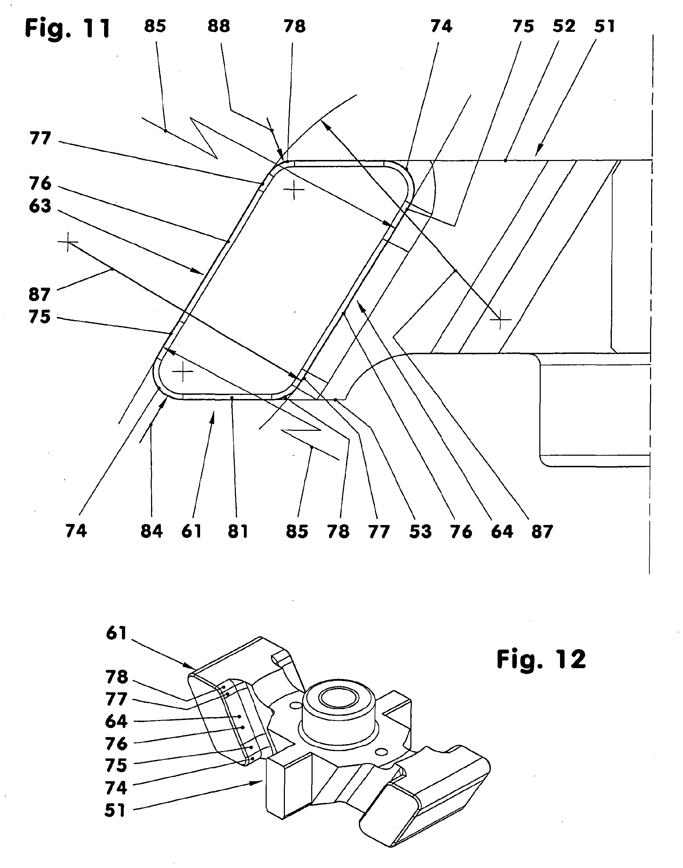

In Figur 11 ist die linke Hälfte der Seitenansicht des Doppelschiebekeilglieds (51) vergrößert dargestellt. Der T-Nutstein (61) bzw. sein in der Zeichnungsebene liegender Querschnitt (72), vgl. Figuren 7 und 8, hat einen parallelogrammförmigen Umriss (71), wobei alle vier Ecken des Parallelogramms abgerundet sind. Die Querschnitte (72) der T-Nutsteine (61, 62), die zwischen der Außenflanke (63) und der Innenflanke (64) liegen und zudem parallel zur vertikalen Mittenlängsebene (8) orientiert sind, haben eine Außenkontur (71), deren Außenkonturpunkte zum Querschnittsflächenschwerpunkt (73) punktsymmetrisch angeordnet sind.

In der seitlichen Ansicht, vgl. Figur 11, die auch die seitlichen Randkantenfasen (81) zeigt, sind die einzelnen Zonen (74 - 78) der Außen- und der Innenflanken (63, 64) durch ihre 0,5x45°-Fasen deutlich zu unterscheiden, vgl. auch Figur 12.

Von unten nach oben sind folgende Zonen an der Außenflanke (63) zu erkennen: eine Hochlastkantenzone (74), eine Hochlastzone (75), eine Mittelzone (76), eine Niederlastzone (77) und eine Niederlastkantenzone (78). Die Mittelzone (76) ist im Ausführungsbeispiel die einzige plane Fläche. Sie liegt im Idealfall, also ohne Verformung des Doppelschiebekeilglieds (51) - beim Öffnen des Parallelgreifers nach Figur 3 - an den Keilflächen (107) der T-Nut (106) des Schlittens (100) vollflächig an.

Die in der Außenflanke (63) nach Figur 11 unten anschließende Hochlastzone (75) ist eine Teilfläche eines Zylindermantels, dessen Krümmungsradius (85) z.B. 235 mm misst. Der Mantelbogen hat einen Zentriwinkel von z.B. 55,3 Winkelminuten. Die Zylindermantelfläche geht hierbei tangential in die Planfläche der Mittelzone (76) über. An die Hochlastzone (75) schließt sich zur Unterseite (53) des Doppelschiebekeilglieds (51) hin die Hochlastkantenzone (74) tangential an.

Oberhalb der Mittelzone (76) befindet sich die Niederlastzone (77), die sich tangential an die Mittelzone (76) anschließt. Auch die Niederlastzone (77) ist Teil eines Zylindermantels. Der Zylindermantel hat bei einem Krümmungsradius (87) von z.B. 23 mm einen Zentriwinkel von z.B. 244,3 Winkelminuten. Damit ist der Krümmungsradius (85) der Hochlastzone (75) mehr als zehnmal so groß wie der Krümmungsradius (88) der Niederlastzone (77). In der Hochlastzone (75) und/oder in der Niederlastzone (77) können plane Bereiche intergriert sein.

Nach oben hin wird die Außenflanke (63) durch die Niederlastkantenzone (78) abgeschlossen. Die Kantenzonen (74, 78) sind geometrisch jeweils ebenfalls Teil eines Zylindermantels, wobei deren Radien (84) jeweils z.B. 2,5 mm messen. Ggf. werden im Querschnitt (72) bzw. im Umriss (71), vgl. Figur 7, die Radiusbögen der Kantenzonen (74, 78) durch Geraden ersetzt, sodass die Kantenzonen (74, 78) plane Flächen sind.

Die Innenflanke (64) des T-Nutsteins (61) hat ebenfalls fünf verschiedene Zonen (74 - 78), die nach Figur 11 nur beispielhaft die gleichen Krümmungen und Zentriwinkel haben wie die Außenflanke (63). Allerdings ist die Reihenfolge vertauscht, womit die Hochlastzone (75) oberhalb der Mittelzone (76) liegt, während die stärker gekrümmte Niederlastzone (77) unterhalb der Mittelzone (76) angeordnet ist, vgl. auch Figur 12. Die jeweilige gekrümmte Kontur, die die Hochlastzone (75) und/oder die Niederlastzone (77) im Querschnitt (72) hat, kann aus verschieden gekrümmten Bögen oder vergleichbaren Kurven zusammengesetzt sein.

Die Unterseite des Basiskörpers (55) weist eine Unterseitenausnehmung (54) mit einer Tiefe von z.B. 4,1 mm auf. Sie erstreckt sich in der Schlittenverfahrrichtung (9) bis ca. 4 mm vor die T-Nutsteine (61, 62). Aus der Unterseitenausnehmung (54) steht der z.B. 10 mm lange Rohrzapfen (56) hervor. Er weist einen Außendurchmesser von z.B. 18 mm auf. Der Basiskörper (55) hat eine durchgehende Gewindebohrung (98), die auch den Rohrzapfen (56) durchdringt. Die Mittellinie der Gewindebohrung (98) ist deckungsgleich mit der Mittellinie (3). Auf den Rohrzapfen (56) ist die Kolbenstangenhülse (131) aufgesteckt. In der Gewindebohrung (98) ist die Kolbenstangenschraube (132) fixiert.

In der Regel wird die Geometrieform des Basiskörpers (55) zwischen dem T-Nutsteinen (61, 62) durch die Form des Fräswerkzeuges vorgegeben, das die Innenflanken (64) freischneidet. Dieses Freischneiden gibt dem Basiskörper (55) die Gestalt eines Doppelkeiles, vgl. Figuren 2, 11 und 12. Nach den Figuren 7 bis 10 erhält der Basiskörper (55) durch eine materialabtragende Nachbearbeitung hier bereichsweise eine zylindrische Außenwandung (57), aus der die Nutsteinhaltestege (91, 92) und die Stützstege (97) herausragen. Diese Außenwandung (57) hat dabei z.B. den gleichen Außendurchmesser wie die angebaute Rohrzapfen (56). Durch diese Nachbearbeitung wird die Masse des Doppelschiebekeilglieds (51) kleiner. Zugleich wird durch diese Maßnahme zwischen der Unterseitenausnehmung (54) und der den Zylinderraum des Stellglieds (120) abgrenzenden Wandung ein das Schmiermittel des Doppelschiebekeilgetriebes (50) verdrängender Spalt vermieden.

Der Übergang zwischen jeder Innenflanke (64) eines T-Nutsteins (61, 62) und dem Nutsteinhaltesteg (91, 92) befindet sich eine Nutsteinausrundung (67), die die Kerbspannungsbelastung der Übergangsstelle gegenüber üblichen Ausrundungen bzw. Außenkerben bei Doppelschiebekeilgliedern des Standes der technik um beispielweise 40 Prozent senkt. Im Ausführungsbeispiel, nach den Figuren 2 und 7 bis 12, hat die Nutsteinausrundung (67) die Form eines Viertels einer Zylindermantelfläche, wobei die seitlichen Mantelflächenenden jeweils tangential in die Innenflanken und tangential in die Seitenwandungen des Nutsteinhaltestegs (91, 92) übergehen. Der Radius der Nutsteinausrundung beträgt z.B. 2 mm.

Auch der Übergang zwischen dem Basiskörper (55) und der Seitenwandung des Nutsteinhaltestegs (91, 92) ist als Stegausrundung (94) ausgebildet, deren Form der Nutsteinausrundung (67) entspricht. In den Ausführungsbeispielen sind nur beispielhaft die Radien der Nutsteinausrundungen (67) und der Stegausrundungen (94) gleich groß.

Jeder T-Nutstein (61, 62) des Doppelschiebekeilglieds (51) greift formschlüssig in einen der in der Führungsnut (20) gelagerten Schlitten (100, 101) ein. Jeder der Schlitten ist primär ein quaderförmiger Körper, in den beidseitig Schlittenführungsnuten (105) eingearbeitet sind. Über die z.B. schrägen Wandungen der Nuten (105) ist der einzelne Schlitten (100, 101) auf den Führungsschienen (31, 32) gleitgelagert. Die Schlitten (100, 101) sind aus dem Einsatzstahl 16MnCr5 gefertigt. Ggf. wird als Werkstoff auch ein Vergütungsstahl oder ein rost- und säurebeständiger Stahl verwendet.

Der einzelne Schlitten (100, 101), dessen Breite z.B. 0,2 mm kleiner ist als die Breite der Führungsnut (20), hat in der dem Doppelschiebekeilglied (51) zugewandten Stirnfläche (103) eine schräg angeordnete T-Nut (106), mit der der Schlitten (100, 101) den T-Nutstein (61, 62) des Doppelschiebekeilglieds (51) mit einem unter 0,1 mm liegenden Spiel umgreift. Die Neigung der T-Nut (106) entspricht der jeweiligen Schrägstellung des darin geführten T-Nutsteins (61, 62) des Doppelschiebekeilglieds (51).

Nach den Figuren 5 und 6 weist die Stirnfläche (103) eine Ausnehmung (111) auf, die parallel und entlang der jeweiligen T-Nut (106) ausgebildet ist. Die Ausnehmung (111), deren Breite z.B. geringfügig größer oder gleich der Breite der T-Nut ist, lässt für die T-Nut (106) zwei Stege (112) stehen. Die Stege (112) haben dabei zumindest über nahezu den größten Teil der Steglänge, oder über die Steggesamtlänge, einen konstanten Querschnitt, sodass über den gesamten Verfahrweg des Doppelschiebekeilglieds (51) die Belastung der Stege nahezu konstant ist oder konstant bleibt, was der Verschleißminderung dient. Gemäß den Figuren 5 und 6 sind in den Grund der T-Nut (106) mit Schmiermittel befüllbare Schmiertaschen (109) eingearbeitet. Auf der dem Doppelschiebekeilglied (51) abgewandten Stirnfläche weist der einzelne Schlitten (100, 101) eine Gewindebohrung auf, vgl. Figur 1, deren Mittellinie auf der Mittenlängsebene (8) liegt. Über diese Gewindebohrung kann eine Führungsnutdichtung (300) mittels einer Senkschraube befestigt werden.

Auf der Oberseite jedes Schlittens (100, 101) befindet sich ein quaderförmiger Adapteraufsatz (115), in dessen Oberseite (102) zwei mit Zylindersenkungen ausgestattete Gewindebohrungen angeordnet sind, an denen die Greifbacken (1, 2) lösbar befestigt werden. In den Zylindersenkungen stecken Zentrierhülsen zur präzisen, zumindest formschlüssigen Positionierung der Greifbacken (1, 2) auf den Schlitten (100, 101). Ggf. sind dort die Greifbacken (1, 2) auch direkt angeformt oder unlösbar fixiert.

Die Schlitten (100, 101) sind in der Führungsnut (20), vgl. Figur 3, so hintereinander angeordnet, dass sich bei minimalem Greifbackenabstand ihre einander zugewandten Stirnseiten (103) kontaktieren oder zumindest fast berühren.

Der mittlere Bereich der Nutöffnung der Führungsnut (20) ist mit einer Abdeckplatte (18) verschlossen. Die Abdeckplatte (18) ist im Bereich der Führungsnut (20) so breit ausgelegt, dass die beiden Schlitten (100, 101), in Schließstellung der Greifbacken (1, 2), diese gerade noch nicht berühren.

Für die Schließ- bzw. Greifbewegung wird der Kolben (121), vgl. Figur 2, der sich zusammen mit dem Doppelschiebekeilglied (51) in seiner oberen Endlage befindet, z.B. mit Druckluft aus dieser Position heraus nach unten bewegt. Dazu wird seine Kolbenstangenseite (123) mit Druckluft beaufschlagt. Das sich nach unten bewegende Doppelschiebekeilglied (51) zieht die Schlitten (100, 101) in der Führungsnut (20) nach innen zur Mitte hin. Die Kombination aus Kolben (121), Kolbenstange (131, 132) und Doppelschiebekeilglied (51) wird zusätzlich in den Quernuten (36) der Führungsschienen (31, 32) geführt. Bei der Schließbewegung kommen die Keilflächen (108) an den Innenflanken (64) des Doppelschiebekeilglieds (51) zur Anlage. Sobald sich die Greifbacken (1, 2) am Werkstück (7) angelegt haben, stoppt die Bewegung bei einer Aufrechterhaltung der vollen Klemmkraft.

Zum Lösen des Werkstücks (7) wird die Kolbenbodenseite mit Druckluft beaufschlagt. Der sich nach oben bewegende Verbund aus dem Kolben (121) und dem Doppelschiebekeilglied (51) drückt die Schlitten (100, 101) bzw. die Greifbacken (1, 2) solange auseinander, bis die Kolbenstangenseite (123) am Grund der Zylinderausnehmung (42) zur Anlage kommt. Hier kontaktieren die Keilflächen (107) bei der Lösebewegung die Außenflanken (63) des Doppelschiebekeilglieds (51).

Zur Erhöhung der Klemm- und Lösekraft können z.B. im Zylinder mehrere Kolben hintereinander angeordnet werden. Auch ist es möglich, den Kolben in mindestens einer Hubrichtung mittels einer mechanischen Feder anzutreiben oder zusätzlich zu unterstützen.

Wird die Greifvorrichtung, wie in Figur 3 dargestellt, als Außengreifer verwendet, ergeben sich zwischen dem ersten Kontakt mit dem zu greifenden Werkstück (7) und dem maximalen Aufbau der zum Handhaben des Werkstücks (7) erforderlichen Greifkraft im Doppelschiebekeilgetriebe (50) verschiedene Bauteilverlagerungen und Bauteilverformungen. Beispielsweise tendieren die Schlitten (100, 101) unter Ausnutzung ihres Führungsspiels zu einem Verkippen. Die im Gehäuseinneren liegenden Enden der Schlitten (100, 101) wandern - mit ihren T-Nuten (106) - nach oben, während die außenliegenden Enden der Schlitten nach unten gepresst werden. Damit wird der von den Keilflächen (107, 108) und der Mittellinie (3) eingeschlossene Winkel kleiner als der durch die Konstruktion vorgesehene Winkel von 29,7 Winkelgraden. Bei konventionellen T-Nutsteinen (61, 62) mit planen Flanken (63, 64) würde sich ein Kantenträgereffekt mit einem die Werkstoffe der beteiligten Bauteile (51, 100, 101) überlastenden, scharfkantigen Linienkontakt einstellen.

Unter der Annahme, dass das Doppelschiebekeilglied (51) sich weder verformt noch verlagert, liegen deren T-Nutsteine (61, 62) des vorliegenden Gegenstands nur noch mit den Hochlastzonen (74) an den Keilflächen (107, 108) an. Die Kontaktzone ist hierbei theoretisch zwar nur eine Linie. Letztere ist jedoch unter Berücksichtigung der realen elastischen Verformungen der jeweiligen Bauteiloberflächen (107, 108; 75) und der sehr geringen Krümmung der Hochlastzone (75) eine größere Rechteckfläche, wodurch die Flächenpressung - trotz der Schlittenverlagerung - weit unter der Flächenpressung liegt, bei der sich eine vorzeitige Materialermüdung einstellen würde.

Zusätzlich unterliegt das Doppelschiebekeilglied (51) einer Biegeverformung. Gemäß der Darstellung in Figur 3 zieht die Kraft des Stellglieds (120) in der Mitte des Doppelschiebekeilglieds (51) nach unten, während an den außenliegenden T-Nutsteinen (61, 62) die Reibkräfte der beiden Keilgetriebe nach oben wirken. In der Folge schließen die Flanken (63, 64) mit der Mittellinie (3) einen Winkel ein, der größer ist als der konstruktiv vorgesehene Winkel ohne die Biegeverformung. Dadurch verstärkt sich der zuvor beschriebene Kantenträgereffekt weiter. Durch die Überlagerung aus der Kippbewegung der Schlitten (100, 101) und aus der Biegeverformung des Doppelschiebekeilglieds (51) verlagern sich die Kontaktzonen zwischen den Außenflanken (63) und den Keilflächen (107) weiter nach unten, während die Kontaktzonen zwischen den Innenflanken (64) und den Keilflächen (108) weiter nach oben wandern. Dennoch bleiben die Kontaktzonen innerhalb der jeweiligen Hochlastzonen (75).

Die Greifvorrichtung kann auch als Innengreifer verwendet werden. Bei einem Innengreifer wird das Werkstück, zum Beispiel ein Ring, von Greifelementen (1, 2) ergriffen, die sich bei der Greifbewegung - im Gegensatz zur Darstellung nach Figur 3 - voneinander wegbewegen. Die Schlitten (100,101) werden hierbei vom Doppelschiebekeilglied (51) auseinandergeschoben. Beim Greifvorgang kippen die Schlitten (100, 101) im Gehäuseinneren (5) in Richtung des Stellglieds (120), während sie sich im äußeren Bereich der Führungsnut (20) nach oben bewegen. Die T-Nutsteine (61, 62) des Doppelschiebekeilglieds (51) verbiegen sich entgegen der Schließbewegung des Stellglieds (120) nach unten. Um einen Kantenträgereffekt zu vermeiden, muss in diesem Fall ein Doppelschiebekeilglied (51) verwendet werden, bei dem an den Außenflanken (63) des Doppelschiebekeilglieds die Hochlastzonen (75) in der Nähe der Oberseite (52) des Doppelschiebekeilglieds (51) angeordnet sind. Die Hochlastzonen (75) der Innenflanken (64) liegen folglich nahe der Unterseite (53).

Im Ausführungsbeispiel gemäß den Figuren 7 und 11 ist der äußere Rand der Niederlastzone (77), also der Übergang zwischen der Niederlastzone (77) und der Niederlastkantenzone (78), von der Keilfläche (107) des jeweiligen Schlittens (100, 101) ca. 30 µm entfernt. Im Gegensatz dazu beträgt der sich aufweitende Spalt am Übergang zwischen der Hochlastzone (75) und der Hochlastkantenzone (74) ca. 58 µm. Dies gilt immer dann, wenn die Mittelzone (76) der Außenflanke (63) des Doppelschiebekeilglieds (51) plan an den Keilflächen (107) anliegt. Die sich durch die Zonen (75) und (77) ergebenden Spalte verjüngen sich, ausgehend von den Kantenzonen (74) und (78), bis zur Mittelzone (76) - entlang der Konturen der Krümmungsradien (85) und (87) - auf null. In der Folge werden bei der Hubbewegung des Doppelschiebekeils (51) die im Gehäuseinnenraum (5) vorhandenen Schmierfette in die belasteten Mittelzonen (76) gefördert. Die sich verjüngenden Spalte verhindern ein Abstreifen des Schmierfettes entlang der Keilflächen (107) und (108).

Bei dem weniger Kraft erfordernden Öffnungshub des Stellglieds (120) übernehmen die Niederlastzonen (77) die Schmiermittelförderung vor die jeweilige Mittelzone (76).

Kombinationen der in den Figuren 1 bis 12 gezeigten Ausführungsbeispiele sind denkbar.

### Bezugszeichenliste:

- 1, 2: Greifelemente, Greifbacken
- 3: Mittellinie zu (10, 50, 120)
- 4: Zylinderinnenraum
- 5: Gehäuseinnenraum, Gehäuseinneres
- 6: Maschinenschlitten, Maschinenteil, Handhabungsgeräteteil
- 7: Werkstück
- 8: vertikale Mittenlängsebene
- 9: Greifrichtung, Schlittenverfahrrichtung
- 10: Grundkörper, Gehäuse
- 11: Führungsabschnitt
- 13: Grundkörperunterseite
- 15: Befestigungsbohrungen, vertikal
- 16: Quergangsbohrungen
- 18: Gehäuseabdeckung, Abdeckplatte
- 20: Führungsnut
- 23, 24: Seitenwandungen, Führungsnutwandungen
- 26: Schienenführungsnut
- 31, 32: Führungsschiene, Schlittenführungsschiene
- 36: Quernut
- 39: vertikale Mittenquerebene
- 41: Antriebsabschnitt
- 42: Zylinderausnehmung, oval
- 44: Durchgangsbohrung, mittig
- 45: Deckelausnehmung
- 46: Sensorausnehmungen
- 48: Deckel
- 49: Vertiefung
- 50: Doppelschiebekeilgetriebe
- 51: Doppelschiebekeilglied, Doppelschiebekeil, Getriebebauteil
- 52: Oberseite
- 53: Unterseite
- 54: Unterseitenausnehmung
- 55: Basiskörper
- 56: Rohrzapfen
- 57: Außenwandung, zylindrisch
- 61, 62: T-Nutsteine
- 63: Außenflanken, Stirnseiten, außen
- 64: Innenflanken
- 65: Stirnseiten, Stirnflächen, schräg
- 67: Nutsteinausrundungen, Ausrundungen, Außenkerben
- 71: Außenkontur, Umriss
- 72: Querschnitt
- 73: Querschnittsflächenschwerpunkt
- 74: Hochlastkantenzone, Kantenzone
- 75: Hochlastzone
- 76: Mittelzone
- 77: Niederlastzone
- 78: Niederlastkantenzone, Kantenzone
- 81: Randkantenfasen von (61) und (62)
- 84: Hochlastkantenradius
- 85: Hochlastradius, Krümmungsradius
- 87: Niederlastradius, Krümmungsradius
- 88: Niederlastkantenradius
- 91, 92: Nutsteinhaltestege
- 94: Stegausrundungen, Ausrundungen, Übergangsstellen, Außenkerben
- 97: Stützstege
- 98: Gewindebohrung
- 100, 101: Schlitten
- 102: Oberseite
- 103: Stirnseite, Stirnfläche
- 105: Schlittenführungsnuten, Nuten
- 106: T-Nut
- 107: Keilflächen, Öffnungsanlage
- 108: Keilflächen, Schließanlage
- 109: Schmiertaschen
- 111: Ausnehmung an (103)
- 112: Stege für (106)
- 115: Adapteraufsatz
- 119: Führungslängsrichtung
- 120: Zylinder-Kolben-Einheit; Antrieb, pneumatisch Stellglied
- 121: Kolben, oval
- 122: Kolbenbodenseite
- 123: Kolbenstangenseite
- 124: Vorsprung, scheibenförmig, Anschlag
- 125: Vorsprung, kolbenbodenseitig, zylindrisch
- 126: Sacklochbohrungen für (136)
- 128: Senkung
- 131: Kolbenstangenhülse, Kolbenstange
- 132: Kolbenstangenschraube, Kolbenstange
- 135: Durchgangsbohrung
- 136: Scheibenmagnete
- 300: Führungsnutdichtung

## Patentansprüche

1. Greifvorrichtung mit bewegliche Greifelemente (1, 2) tragenden Schlitten (100, 101), wobei die Schlitten (100, 101) in Greifrichtung (9) der Greifelemente (1, 2) hintereinander in einer in einem Grundkörper (10) angeordneten, zu den Greifelementen (1, 2) hin zumindest bereichsweise offenen Führungsnut (20) parallel zur Greifrichtung (9) - zwischen einer Öffnungs- und Schließstellung - über ein Stellglied (120) antreibbar geführt und quer zur Greifrichtung (9) allseitig abstützend gelagert sind,
- wobei zwischen den Schlitten (100, 101) ein diese kuppelndes Doppelschiebekeilglied (51) angeordnet ist, das senkrecht zur Greifrichtung (9) verfahrbar an einem beweglichen Teil des Stellglieds (120) angelenkt ist,
- wobei die Schlitten (100, 101) in den einander zugewandten Stirnflächen (103) jeweils eine T-Nut (106) aufweisen, in die jeweils ein vom Doppelschiebekeilglied (51) abstehender T-Nutstein (61, 62) eingreift,
- wobei die T-Nutsteine (61, 62) an einem zentralen Basiskörper (55) des Doppelschiebekeilglieds (51) jeweils über einen Nutsteinhaltesteg (91, 92) angeformt oder angeordnet sind,
- wobei die Führungslängsrichtungen (119) der T-Nuten (106) einen Winkel von 45 bis 122 Winkelgraden einschließen,
**dadurch gekennzeichnet,**
- **dass** der einzelne T-Nutstein (61, 62) jeweils eine Außen- (63) und zwei Innenflanken (64) aufweist,
- **dass** jede Flanke (63, 64) in eine Hochlastkantenzone (74), eine Hochlastzone (75), eine plane Mittelzone (76), eine Niederlastzone (77) und eine Niederlastkantenzone (78) aufgeteilt ist,
- **dass** die Zonen (74 - 78), außer der Mittelzone (76), gekrümmte Raumflächen sind, deren Krümmung jeweils nur in einer vertikalen Mittenlängsebene (8) liegt und
- **dass** die Hochlastzonenkrümmung jeweils mindestens 5-mal größer ist als die Niederlastzonenkrümmung.

2. Greifvorrichtung gemäß Anspruch 1, **dadurch gekennzeichnet, dass** die Hochlastzone (75) und die Niederlastzone (77) tangential aus der Mittelzone (76) hervorgehen.

3. Greifvorrichtung gemäß Anspruch 1, **dadurch gekennzeichnet, dass** die Krümmungen der Hochlastzone (75) und der Niederlastzone (77) im Querschnitt (72) Kreisbogenkrümmungen sind.

4. Greifvorrichtung gemäß Anspruch 1, **dadurch gekennzeichnet, dass** die Kantenzonen (74, 78) alle den gleichen Krümmungsradius haben.

5. Greifvorrichtung gemäß Anspruch 1, **dadurch gekennzeichnet, dass** die Querschnitte (72) der T-Nutsteine (61, 62), die zwischen einer Außenflanke (63) und einer Innenflanke (64) liegen und zudem parallel zur vertikalen Mittenlängsebene (8) orientiert sind, eine Außenkontur (71) haben, deren Außenkonturpunkte zum Querschnittsflächenschwerpunkt (73) punktsymmetrisch angeordnet sind.

6. Greifvorrichtung gemäß Anspruch 1, **dadurch gekennzeichnet, dass** in der Hochlastzone (75) und/oder in der Niederlastzone (77) plane Bereiche intergriert sind.

7. Greifvorrichtung nach mindestens einem der vorangegangenen Ansprüche, **dadurch gekennzeichnet, dass** die Hochlastzone (75) und/oder die Niederlastzone (77) im Querschnitt (72) eine gekrümmte Kontur haben, wobei die jeweilige Kontur aus verschieden gekrümmten Bögen oder vergleichbaren Kurven zusammengesetzt ist.

8. Greifvorrichtung gemäß Anspruch 1 und 5, **dadurch gekennzeichnet, dass** bei einem Außengreifer in den Außenflanken (63) die Hochlastzonen (75) nahe der Unterseite (53) des Doppelschiebekeilglieds (51) liegen.

9. Greifvorrichtung gemäß Anspruch 1 und 5, **dadurch gekennzeichnet, dass** bei einem Innengreifer in den Außenflanken (63) die Hochlastzonen (75) nahe der Oberseite (52) des Doppelschiebekeilglieds (51) liegen.

## Claims

1. Gripping device having slides (100, 101) bearing movable gripping elements (1, 2), wherein the slides (100, 101) are guided in a row, as seen in the gripping direction (9) of the gripping elements (1, 2), in a guide groove (20) parallel to the gripping direction (9) - between an opening position and a closing position
- which guide groove (20) is arranged in a main body (10) and is at least partially open to the gripping elements (1, 2), in such a manner that the slides (100, 101) can be driven via an actuator (120) and are supported on all sides transversely to the gripping direction (9),
- wherein a double sliding wedge member (51) coupling the slides (100, 101) is arranged between said slides, which double sliding wedge member (51) is articulated at a movable part of the actuator (120) such that the double sliding wedge member (51) is movable perpendicular to the gripping direction (9),
- wherein the slides (100, 101) have respective T-slots (106) in their front surfaces (103) facing each other, each of which T-slots (106) engages with a T-nut (61, 62) protruding from the double sliding wedge member (51),
- wherein the T-nuts (61, 62) are moulded onto or arranged on a central base body (55) of the double slide wedge member (51) via respective nut holding bars (91, 92),
- wherein the guide longitudinal directions (119) of the T-slots (106) enclose an angle of 45 to 122 angular degrees,
**characterized in**
- **that** each individual T-nut (61, 62) has one outer flank (63) and two inner flanks (64),
- **that** each flank (63, 64) is divided into a high-load edge zone (74), a high-load zone (75), a flat central zone (76), a low-load zone (77) and a low-load edge zone (78),
- **that** the zones (74-78), other than the central zone (76), are curved spatial surfaces, the curvature of which is located only in one vertical centre longitudinal plane (8) and
- **that** the high-load zone curvature is at least five times greater than the low-load zone curvature.

2. Gripping device according to claim 1, **characterized in that** the high-load zone (75) and the low-load zone (77) emerge tangentially from the central zone (76).

3. Gripping device according to claim 1, **characterized in that** the curvatures of the high-load zone (75) and the low-load zone (77) are arc-shaped in their cross-section (72).

4. Gripping device according to claim 1, **characterized in that** the edge zones (74, 78) all have the same radius of curvature.

5. Gripping device according to claim 1, **characterized in that** the cross-sections (72) of the T-nuts (61, 62), which are located between an outer flank (63) and an inner flank (64) and are also oriented parallel to the vertical centre longitudinal plane (8), have an outer contour (71), the outer contour points of which are arranged point-symmetrically to the cross-sectional area centre of gravity (73).

6. Gripping device according to claim 1, **characterized in that** flat regions are integrated in the high-load zone (75) and/or in the low-load zone (77).

7. Gripping device according to at least one of the preceding claims, **characterized in that** the high-load zone (75) and/or the low-load zone (77) have a curved contour in the cross-section (72), wherein the contour in question is composed of different curved arcs or comparable curves.

8. Gripping device according to claim 1 and 5, **characterized in that** the high-load zones (75) in the outer flanks (63) of an outer gripper are located near the underside (53) of the double sliding wedge member (51) .

9. Gripping device according to claim 1 and 5, **characterized in that** the high-load zones (75) in the outer flanks (63) of an inner gripper are located near the upper side (52) of the double sliding wedge member (51) .

## Revendications

1. Dispositif de préhension, doté de chariots (100, 101) portant des éléments de préhension (1, 2) mobiles, dans le sens de préhension (9) des éléments de préhension (1, 2), les chariots (100, 101) étant guidés les uns derrière les autres dans une rainure de guidage (20) placée dans un corps de base (10), ouverte au moins par endroits en direction des éléments de préhension (1, 2), à la parallèle du sens de préhension (9) - entre une position d'ouverture et de fermeture -, en étant susceptibles d'être entraînés par l'intermédiaire d'un actionneur (120) et étant logés à la transversale du sens de préhension (9) en appui de toute part,
- entre les chariots (100, 101) étant placé un double élément de calage coulissant (51) couplant ces derniers, qui en étant déplaçable dans le sens de préhension (9) est articulé sur une pièce mobile de l'actionneur (120),
- les chariots (100, 101) comportant dans les surfaces frontales (103) qui se font face une rainure en forme de T (106) chacun, dans laquelle s'engage chaque fois une clavette en forme de T (61, 62) débordant du double élément de calage coulissant (51),
- les clavettes en forme de T (61, 62) étant surmoulées ou placées, chacune par l'intermédiaire d'une barrette de maintien de clavette (91, 92) sur un corps de base (55) central du double élément de calage coulissant (51),
- les sens longitudinaux de guidage (119) des rainures en forme de T (106) incluant un angle de 45 à 122 degrés,
**caractérisé**
- **en ce que** la clavette individuelle en forme de T (61, 62) comporte respectivement un flanc externe (63) et deux flancs internes (64),
- **en ce que** chaque flanc (63, 64) est divisé en une zone d'arête à charge élevée (74), en une zone à charge élevée (75), en une zone médiane (76) plane, en une zone à faible charge (77) et en une zone d'arête à faible charge (78),
- **en ce que** les zones (74 à 78), à l'exception de la zone médiane (76) sont des surfaces spatiales curvilignes, dont la courbure ne se situe chaque fois que dans un plan médian longitudinal (8) vertical et
- **en ce que** la courbure de la zone à charge élevée est chaque fois 5 fois plus grande que la courbure de la zone à faible charge.

2. Dispositif de préhension selon la revendication 1, **caractérisé en ce que** la zone à charge élevée (75) et la zone à faible charge (77) ressortent tangentiellement de la zone médiane (76).

3. Dispositif de préhension selon la revendication 1, **caractérisé en ce que** dans la section transversale (72), les courbures de la zone à charge élevée (75) et de la zone à faible charge (77) sont des courbures en arc de cercle.

4. Dispositif de préhension selon la revendication 1, **caractérisé en ce que** les zones d'arête (74, 78) ont toutes le même rayon de courbure.

5. Dispositif de préhension selon la revendication 1, **caractérisé en ce que** les sections transversales (72) des clavettes en forme de T (61, 62), qui se situent entre un flanc externe (63) et un flanc interne (64) et qui par ailleurs sont orientées à la parallèle du plan médian longitudinal (8) vertical ont un contour extérieur (71) dont les points de contour extérieur sont placés en symétrie ponctuelle du centroïde (73) de section transversale.

6. Dispositif de préhension selon la revendication 1, **caractérisé en ce que** dans la zone à charge élevée (75) et/ou dans la zone à faible charge (77) sont intégrés des régions planes.

7. Dispositif de préhension selon au moins l'une quelconque des revendications précédentes, **caractérisé en ce que** dans la section transversale (72), la zone à charge élevée (75) et/ou la zone à faible charge (77) ont un contour curviligne, le contour respectif se composant d'arcs à différentes courbures ou de courbures comparables.

8. Dispositif de préhension selon la revendication 1 et 5, **caractérisé en ce que** sur un préhenseur externe, dans les flancs externes (63), les zones à charge élevée (75) se situent à proximité de la face inférieure (53) du double élément de calage coulissant (51).

9. Dispositif de préhension selon la revendication 1 et 5, caractérisé en ce sur un préhenseur interne, dans les flancs externes (63), les zones à charge élevée (75) se situent à proximité de la face supérieure (52) du double élément de calage coulissant (51).
